# EUROPEAN PATENT SPECIFICATION

(11) **EP 0 442 446 B1**
(45) Date of publication and mention of the grant of the patent: **30.08.1995**
(21) Application number: 91101956.0
(22) Date of filing: 12.02.1991
(51) Int. Cl.: B60K 17/35

(54) **Vehicular four wheel drive train**
Allradantrieb für ein Fahrzeug
Transmission à quatre roues motrices pour véhicule

(30) Priority: 14.02.1990 JP 33302/90
(43) Date of publication of application: 21.08.1991
(73) Proprietor: NISSAN MOTOR CO., LTD., Yokohama City (JP)
(72) Inventor: Yamasaki, Saburo, Isehara City, Kanagawa Prefecture (JP); Hara, Tomoyuki, Hadano City, Kanagawa Prefecture (JP)
(74) Representative: Grünecker, Kinkeldey, Stockmair & Schwanhäusser Anwaltssozietät

(56) References cited:
- DE-C- 574 413
- FR-A- 835 082
- FR-A- 1 424 799
- FR-A- 2 253 645
- GB-A- 2 189 861

## Description

### BACKGROUND OF THE INVENTION

### Field of the Invention

The present invention relates generally to an automotive four wheel drive train which includes a transfer gear via which engine drive output is distributed to the forward and rear wheels and more specifically to a four wheel drive train which enables the engine, clutch and transfer gear to be disposed at one end of the vehicle and the transmission to be located at the other end, and thus improves the vehicular weight distribution.

### Description of the Prior Art

It is well known that in order to improve the overall handling characteristics of a vehicle it is advantageous to distribute the weight of the drive train evenly between the forward and rear axles.

One attempt to achieve the above mentioned type of weight distribution in a high performance vehicle has been to dispose the engine at the front of the vehicle, dispose the clutch, transmission and final drive (which are arranged in that order) at the rear, and interconnect the engine and the clutch with a propeller shaft which is housed in a torque tube.

While this has met with success in pure F-R type gear trains, adapting of this concept to 4WD type drive trains has encountered some difficulties in that it is necessary to add a transfer gear and to connect this with the front final drive.

A 4WD arrangement of the above mentioned nature is disclosed in JP-A-62-247924. However, in this instance a number of drawbacks are encountered. That is to say, the propeller shaft which interconnects the transfer gear at the rear of the vehicle with the front final drive becomes excessively long. Further, the propeller shaft is offset to one side of the vehicle center line and thus tends to broaden the tunnel which ends through the vehicle cabin to an undesirable degree.

JP-A-61-157437 discloses another prior art four wheel drive train which is also based on an F-R drive arrangement. In this arrangement the engine, transmission, transfer and front final drive are disposed at the front of the vehicle, while the rear final drive is disposed at the rear of the same. The engine torque is transferred directly to the front wheels and to the rear wheels via a transfer clutch.

However, with this type of prior art four wheel drive train as the engine, transmission, transfer and front final drive are disposed at the front of the vehicle chassis and only the rear transfer is disposed at the rear, the distribution of the weight with respect to the front and rear axles of the vehicle is such that a disproportionate amount is located near the front axle. As a result, the desired weight distribution is not achieved and the handling characteristics of the vehicle tends to be accordingly impaired.

Thus, as will be appreciated, in the case when it is desired to adapt basic F-R or F-F type drive trains to provide 4WD it is necessary to contrive a position for the transfer and the propeller shaft or shafts. For example, in the prior art when the transfer is connected to the transmission output shaft with normal techniques wherein the transfer is disposed toward the rear of the chassis, the propeller shaft which extends from the transfer to the front final drive must be extremely elongated and at the same time positioned not to interfere with the engine.

GB-A 21 89 861 according to the precharacterising part of claim 1 comprises a four wheel vehicle drive train having an engine, a transmission and two differential gears. One of said differential gears is disposed with the engine and the other is disposed with the transmission. A first propeller shaft connects the engine with the transmission. The transmission splits the torque transmitted via the first propeller shaft wherein one output part is connected to the differential gear disposed in the vicinity of the transmission and the other output part is connected via a second propeller shaft to the differential gear disposed in the vicinity of the engine. A full time torque transmitting coupling is disposed between the second propeller shaft and the differential means.

### SUMMARY OF THE INVENTION

In view of the above problems it is an object of the present invention in accordance with the problem solving means set forth below, to provide a four wheel drive power train the layout of which does not require a highly elongated propeller shaft, appropriately distributes the weight between the front end rear wheels, and in which interference between the propeller shaft and the engine does not occur.

According to the invention, as defined in claim 1, a four wheel vehicle drive train includes an engine, a transmission, a first differential gear and a second differential gear. Said engine is disposed with one of the first and second differential gears and operatively connected therewith, and said transmission is disposed with and operatively connected with the other of the first and second differential gears. Said engine is connected with the transmission by a first propeller shaft and is located at a front wheel side of the vehicle. Said transmission is located at the rear wheel side of the vehicle, receives an output driving force from the engine and is provided with two output parts. Said differential gear is disposed in the vicinity of said transmission for distributing final drive to the rear wheels wherein said first differential distributes the engine output power from said transmission via one of said two output parts of said transmission into two rear wheels. Said second differential gear is disposed in the vicinity of said engine for distributing final drive to the front wheels. Said first propeller shaft is disposed between said engine and said transmission so as to transmit drive therebetween. A second propeller shaft is connected to the other output part of the transmission. The improvement is characterized in that said second propeller shaft is hollow so as to enclose coaxially said first propeller shaft and serves to transmit drive between said transmission and a transfer clutch which is controlled by externally applied hydraulic pressure to selectively transmit drive. A torque tube encloses said first and second propeller shafts and links their transmission to the transfer clutch. Said transfer clutch is located at the front wheel side and arranged behind said engine in a forward motion direction of the vehicle and is disposed coaxially with said first propeller shaft. A third propeller shaft is disposed with its axis in a position offset sideways from the first and second propeller shafts in the forward motion direction of the vehicle and connected to said second differential gear. A torque transmitting means is connected to said transfer clutch and said offset positioned third propeller shaft.

### BRIEF DESCRIPTION OF THE DRAWING

Fig. 1 is a schematic plan view showing the drive train layout which characterizes the present invention;
Fig. 2 is a sectional plan view showing constructional details of a drive train of a first embodiment of the present invention which is configured in accordance with the layout shown in Fig. 1;
Fig. 3 is a sectional view taken along section line I - I of Fig. 2; and
Fig. 4 is a sectional view showing a propeller shaft arrangement according to a second embodiment of the present invention.

### DETAILED DESCRIPTION OF THE PREFERRED EMBODIMENTS

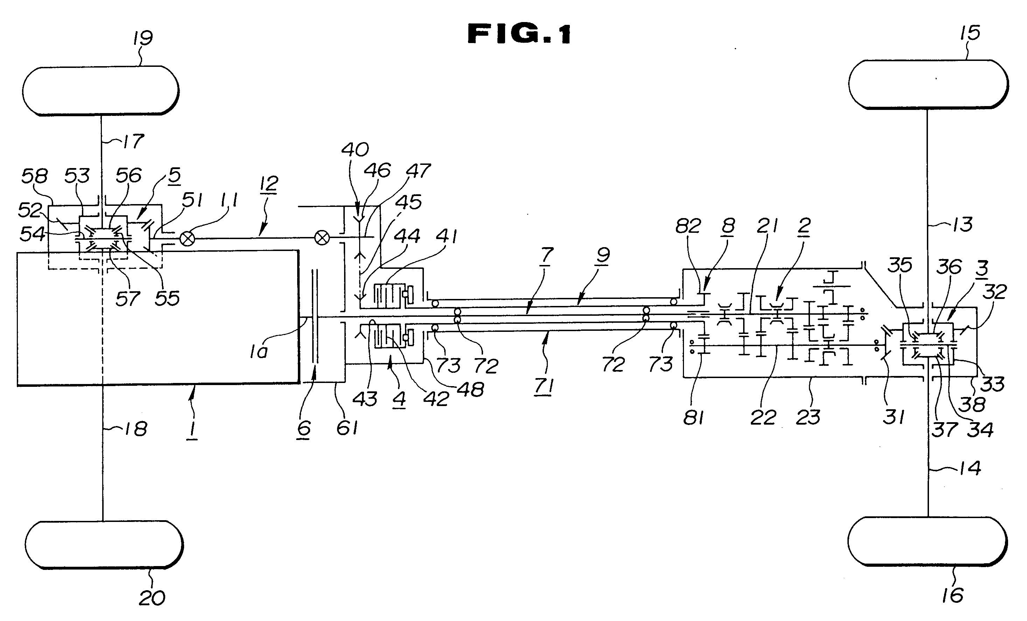

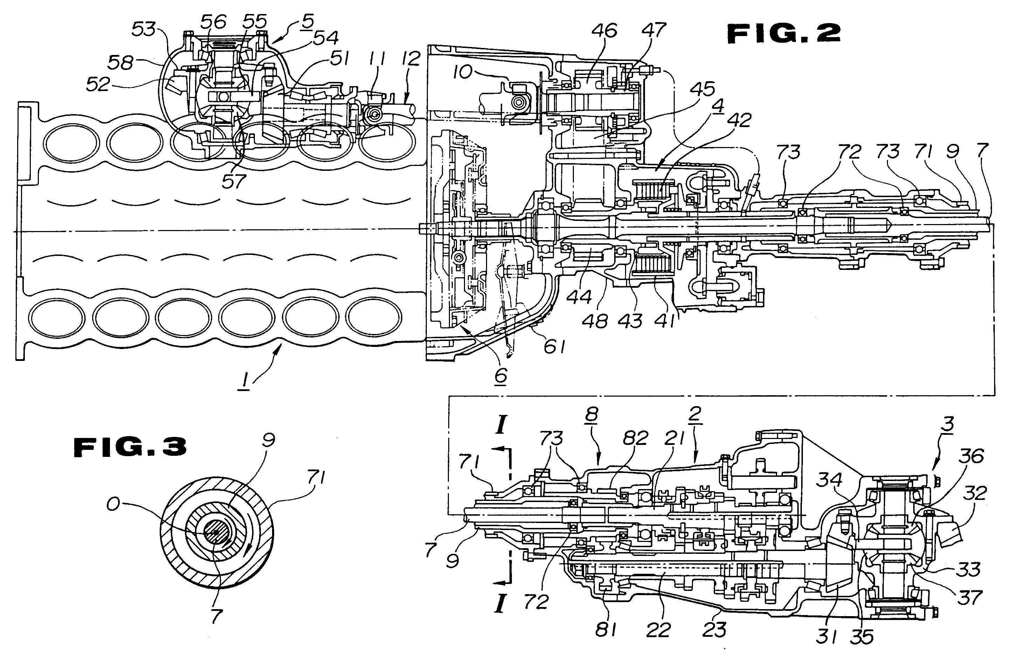

Figs. 1 and 2 show the drive train skeleton and sectional view an embodiment of a four wheel drive which includes a V-12 engine 1; a five forward speed, one reverse manual transmission 2; a rear final drive 3 which includes a differential gear; a transfer 4 which includes a variable torque split type clutch which is controlled by externally applied hydraulic pressure and which proportions the amount drive power to the front wheels; and a front final drive 5 which includes a differential gear.

The engine 1, transfer clutch 4, and front final drive 5 are disposed at one end of the vehicle. In this case it is assumed that this end is the front of the vehicle. However, it will be appreciated that, the invention is not limited to forward engine type vehicles and an aft disposition is well within the scope of the present invention.

On the other hand, the manual transmission 2 and rear final drive 3 are disposed at the other end of the vehicle (viz., the rear of the vehicle).

The above mentioned engine 1 and the input shaft of the transmission 2 are connected by way of a clutch 6 and a first propeller shaft 7.

It should be noted that the clutch 6 is mounted on the rear end of the engine block and in direct connection with the crankshaft of the engine 1.

The output shaft 22 of the transmission 2 and a clutch 41 of the transfer 4 are connected by way of a second output shaft construction which comprises meshing output and input gears 81 & 82, and a second hollow propeller shaft 9.

A driven element (clutch hub 43) of the transfer clutch 41 is connected with a first sprocket 44 for synchronous rotation therewith. A chain 45 connects the first sprocket with a second sprocket 46 which is mounted on the output shaft 47 of the transfer gear 7. The sprockets and chain form part of a intermediate gearing 40.

Universal joints 10, 11 interconnect a third propeller shaft 12 with the output shaft 47 and a drive pinion 51 of the forward final drive 5.

A drive pinion 31 which forms part of the output section of the rear final drive 3, is formed integrally with one end of the transmission output shaft 22. Side gears 36, 37 and rear drive shafts 13, 14 establish a drive connection with the rear wheels 19, 20.

The transfer case 48 of the above mentioned transfer clutch 4 and the transmission case 23 of the manual transmission 2, are connected by a torque tube 71. This torque tube 71 houses the first propeller shaft 7 and the coaxially arranged hollow second propeller shaft 9.

Further, as shown in Fig. 3 the above mentioned output and input gears 81, 82 are arranged to comprise a gearing 8 which establishes a drive connection between the output shaft 22 of the transmission and the second propeller shaft 9 and which drive the second propeller shaft 9 in the same rotational direction as that in which the first propeller shaft 7 is driven by the engine.

The first propeller shaft 7 is supported with the second propeller shaft 9 by way of ball bearings 7, and the latter is rotatably supported in the torque tube 71 by way of ball bearings 73.

It should be noted that the rear final case 38 is connected to the transmission case 23 to form a single housing. In a similar manner a clutch cover 61 is connected with the transfer case 48. A front final drive case 58 encloses the front final drive gear 5.

### OPERATION

The engine drive power transmission which takes place with the clutch 6 fully engaged and with the manual transmission 2 set in a predetermined gear ratio position is such that power from the engine 1 goes from the engine crank shaft 1a --> clutch 6 --> first propeller shaft 7 --> transmission input shaft 21 --> transmission gears --> the transmission output shaft 22, and distributed from the transmission output shaft 22 to the drive train of rear wheels 15, 16 and the drive train of the front wheels 19, 20.

The rear wheels 15, 16 are supplied with driving torque from the transmission output shaft 22 to the rear final drive 3 (rear drive pinion 31 --> ring gear 32 --> diff case 33 -->pinion shaft 34 --> pinion 35 --> side gears 36, 37) --> rear drive shafts 13, 14.

Drive power is transmitted to the front wheels 19, 20 by way of the transmission output shaft 22 --> output gear 81 --> input gear 82 --> second propeller shaft 9 --> transfer clutch 4 (clutch drum 41 --> clutch plate 42 --> clutch hub 43) --> central transfer hub 43) --> first sprocket 44 of the --> chain 45 --> second sprocket 46 --> output shaft 47) --> universal joint 10 --> third propeller shaft 12 --> universal joint 11 --> front final drive 5 (front drive pinion 51 --> ring gear 52 --> diff case 53 --> pinion shaft 54 --> pinion 55 --> side gears 56, 57) --> front drive shafts 17, 18.

The clutch engagement in the transfer clutch 4 is controlled by an externally applied hydraulic pressure the level of which is controlled in accordance with the front/rear wheel rotational speed difference, the vehicle speed, accelerator depression degree, the lateral acceleration, etc.

It should be noted that when the transfer clutch 4 assumes a fully engaged clutch condition, the front/rear wheel drive force distribution under four wheel drive conditions, becomes 1 : 1.

In accordance with the reduction of clutch engagement and the resulting controlled slip, the amount of torque which is distributed to the rear wheels with respect to that supplied to the forward ones is increased. Further, when the the transfer clutch 4 assumes a fully released state, the torque distribution to the rear wheels becomes 100%.

In accordance with the above four wheel drive drive train the following advantages are achieved.
1) As the engine 1, transfer clutch 4 and front final drive 5 are disposed at the front of the chassis, and the manual transmission 2, rear final drive 3 are disposed at the rear of the same, the weight distribution between the front and the rear of the vehicle tends to be unified and in a manner which promotes optimal vehicle handling characteristics.
2) The first propeller shaft 7 which interconnects the engine 1 and the manual transmission 2, the second propeller shaft which interconnects the manual transmission 2 and the transfer clutch 4, and the third propeller shaft 12 which connects the transfer clutch 4 and the forward final drive 5, are such as exhibit relatively small differences in length. Further, as the output shaft 47 of the transfer clutch 4 is offset with respect to the coaxially arranged first and second propeller shafts 7, 9, the third propeller shaft 12 is displaced sideways sufficiently that interference with the engine is obviated.
3) As the first propeller shaft 7 is coaxially disposed within the hollow second propeller shaft 9, the arrangement becomes compact and eliminates the transfer of unreasonable amounts of torque. That is to say, as the first propeller shaft 7 is directly connected with the engine 1, the amount of torque which is transmitted by the second propeller shaft 9 is smaller in comparison. Viz., part of the torque which is supplied through the first propeller shaft 7 is transferred to the rear wheels whereby the remainder is transferred via the second propeller shaft 9. It will be noted that the amount of torque which is transferred from the output gear 81 to the second propeller shaft 9 is relatively high, the above mentioned construction is such that the second propeller shaft can adequately meet the torque transfer requirements while still remaining highly compact.
4) As the first propeller shaft is disposed coaxially within the hollow second one so as to be rotatable about a common axis of rotation o, the output gear 81 and the input gear 82 rotate in a manner to induce the two shafts 7, 9 to rotate in the same rotational direction, the first ball bearings 72 are well able to absorb the small rotational differences which tend to occur therebetween such as during the occurrence of wheel slip and the like, and there is chance of bearings undergoing excessive heating and/or permanent thermal damage. This of course markedly prolongs the life of the bearings.
   It should be noted that if the first and second propeller shafts 7 and 9 were to be disposed so as to rotate in opposite rotational directions, the relative rotation would amount to the sum of the rotational speeds of the two shafts. Under prolonged high speed running the bearings would become abnormally heated and accordingly would tend to burn out or seize. Alternatively, in order to prevent this overheating a cooling system would be have to be specially provided.
5) The transfer case 48 of the transfer clutch 4 and the transmission case 23 of the transmission 2 are connected by the torque tube 71, and the first and second propeller shafts 7, 9 are coaxially disposed therein and are are parallel with the center line of the vehicle, an increase in the width of the transmission tunnel in the vehicle cabin is eliminated. The circular shape of the torque tube 71 increase the compactness of the vehicle cabin tunnel improving cabin space.
6) As the rear drive pinion 31 is formed integrally at one end of the transmission output shaft 22 and the output gear 81 is connected to the other end, as compared with the case wherein the rear drive pinion 31 and the output gear are disposed as individual parts, the number of parts is decreased and the construction simplified to the degree that the transmission 2, the rear drive 3 and the gearing arrangement 8 can constructed and housed in the form a single unit.

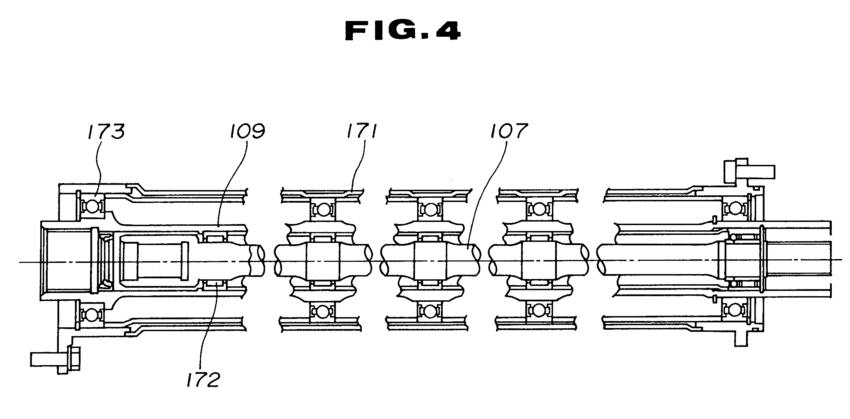

Fig. 4 shows the construction which characterizes a second embodiment of the present invention. In this figure 107 denotes the first propeller shaft, 109 the second and 171 the torque tube in which the two propeller shafts are housed. In this embodiment needle bearings 172 are used in place of roller bearings between the two shafts. By using needle bearings it is possible to reduce the overall diameter of the propeller shaft and thus achieve a further saving in space. It should be noted that the use of needle bearings in place of the roller bearings 173 is also possible for the purpose of reducing the diameter of the torque tube.

It will be noted that the present invention is not necessarily limited to disclosed embodiments and various modifications can be made without departing from the scope of the present invention. By way of example, the manual transmission can be replaced with an automatic type transmission of the type shown in Fig. 1 of United States Patent 4,626,754 issued on Dec. 16, 1986 in the name of Ideta et al or a stepless type wherein the shaft which is connected to output gear is capable of being extended and fitted with a gear similar to output gear 81.

## Claims

1. A four wheel vehicle drive train having an engine (1) a transmission (2), a first differential gear (3) and a second differential gear (5), wherein
said engine (1) is disposed with one (3;5) of the first and second differential gears (3;5) and operatively connected therewith, and said transmission (2) is disposed with and operatively connected with the other (5;3) of the first and second differential gears (3,5);
said engine (1) is connected with the transmission (2) by a first propeller shaft (7;107) and is located at a front wheel side (17,18,19,20) of the vehicle;
said transmission (2) is located at the rear wheel side (13,14,15,16) of the vehicle, receives an output driving force from the engine (1), and is provided with two output parts;
said first differential gear (3) is disposed in the vicinity of said transmission (2) for distributing final drive to the rear wheels (15,16), said first differential gear (3) distributing the engine output power from said transmission (2) via one of said two output parts of the transmission (2) into two rear wheels (15,16);
said second differential gear (5)is disposed in the vicinity to said engine (1) for distributing final drive to said front wheels (19,20);
said first propeller shaft (7;107) is disposed between said engine (1) and said transmission (2) so as to transmit drive therebetween; and
a second propeller shaft (9;109) being connected to the other output part of the transmission (2);
**characterized in that**
said second propeller shaft (9;109) is hollow so as to enclose coaxially said first propeller shaft (7;107) and serves to transmit drive between said transmission (2) and a transfer clutch (4) controlled by externally applied hydraulic pressure to selectively transmit drive;
a torque tube (71;171) encloses said first and second propeller shafts (7,107;9,109) and links the transmission (2) to the transfer clutch (4);
said transfer clutch (4) is located at the front wheel side and arranged behind said engine (1) in a forward motion direction of the vehicle and is disposed coaxially with said first propeller shaft (7;107);
a third propeller shaft (12) is disposed with its axis in a position offset sideways from the first and second propeller shafts (7; 107; 9; 109) in the forward motion direction of the vehicle and connected to said second differential gear (5); and
a torque transmitting means (40) is connected to said transfer clutch (4) and said offset positioned third propeller shaft (12).

2. A four wheel vehicle drive train as set forth in claim 1
**characterized in that**
at least two of the first, second and third propeller shafts (7,9,12;107,109,12) have similar lengths.

3. A four wheel vehicle drive train as set forth in claim 1
**characterized in that**
all of the first, second and third propeller shafts (7,9,12;107,109,12) have similar lengths.

4. A four wheel vehicle drive train as set forth in any of the preceding claims **characterized in that**
the first differential gear (5;3) is disposed proximate the engine (1) and second differential gear (3;5) is disposed proximate the transmission (2).

5. A four wheel vehicle drive train as set forth in any of the preceding claims **characterized in that**
a clutch (6) or torque converter is associated with the first propeller shaft (7;107) and is located proximate one of the engine (1) and the transmission (2).

6. A four wheel vehicle drive train as set forth in any of the preceding claims **characterized in**
that the clutch (6) or torque converter is disposed between the engine (1) and the transfer clutch (4),
that the clutch (6) or torque converter and the transfer clutch (4) are disposed in interconnected casings (48,61) which are connected to the engine (1), and
that the transmission (2) and the second differential gear (3) are disposed together and housed in interconnected casings (23,38).

7. A four wheel vehicle drive train as set forth in any of the preceding claims **characterized in that**
bearings (72;172) are disposed between the first and second propeller shafts (7,9;107,109) and bearings (73;173) are disposed between the torque tube (71;171) and the second hollow propeller shaft (9;109).

## Patentansprüche

1. Vierradfahrzeug-Antriebsstrang, der einen Motor (1), ein Getriebe (2), ein erstes Differentialgetriebe (3) und ein zweites Differentialgetriebe (5) aufweist, wobei
der Motor (1) mit einem Differentialgetriebe (3; 5) des ersten und zweiten Differentialgetriebes (3; 5) angeordnet ist und funktionell mit diesem verbunden ist, und wobei das Getriebe (2) mit dem anderen Differentialgetriebe (5; 3) des ersten und zweiten Differentialgetriebes (3, 5) angeordnet und funktionell mit diesem verbunden ist;
der Motor (1) mit dem Getriebe (2) über eine erste Gelenkwelle (7; 107) verbunden ist und an einer Vorderradseite (17, 18, 19, 20) des Fahrzeugs angeordnet ist;
das Getriebe (2) an der Hinterradseite (13, 14, 15, 16) des Fahrzeugs angeordnet ist, eine Ausgangsantriebskraft von dem Motor (1) aufnimmt und mit zwei Ausgangsteilen ausgestattet ist;
das erste Differentialgetriebe (3) in der Nachbarschaft des Getriebes (2) angeordnet ist zum Verteilen des Achsantriebs auf die Hinterräder (15, 16), das erste Differentialgetriebe (3) die Motorausgangsleistung von dem Getriebe (2) über eines der beiden Ausgangsteile des Getriebes (2) auf zwei Hinterräder (15, 16) verteilt;
das zweite Differentialgetriebe (5) in der Nachbarschaft des Motors (1) angeordnet ist zum Verteilen des Achsantriebs auf die Vorderräder (19, 20);
die erste Gelenkwelle (7, 107) zwischen dem Motor (1) und dem Getriebe (2) so angeordnet ist, daß sie den Antrieb zwischen diesen überträgt; und
eine zweite Gelenkwelle (9; 109) mit dem anderen Ausgangsteil des Getriebes (2) verbunden ist;
**dadurch gekennzeichnet,** daß
die zweite Gelenkwelle (9; 109) hohl ist, um die erste Gelenkwelle (7; 107) koaxial zu umschließen und dazu dient, den Antrieb zwischen dem Getriebe (2) und der Übertragungskupplung (4) zu übertragen, die durch einen extern beaufschlagten Hydraulikdruck gesteuert wird, um ausgewählt den Antrieb zu übertragen;
ein Drehmomentrohr (71; 171) die erste und zweite Gelenkwelle (7, 107; 9, 109) umschließt und das Getriebe (2) mit der Übertragungskupplung (4) verbindet;
die Übertragungskupplung (4) an der Vorderradseite angeordnet ist und hinter dem Motor (1) in einer Vorwärtsbewegungsrichtung des Fahrzeugs angeordnet ist und koaxial zu der ersten Gelenkwelle (7; 107) angeordnet ist;
eine dritte Gelenkwelle (12) mit ihrer Achse in einer Position seitlich versetzt von der ersten und zweiten Gelenkwelle (7; 107, 9; 109) in Vorwärtsbewegungsrichtung des Fahrzeugs angeordnet ist und mit dem zweiten Differentialgetriebe (5) verbunden ist; und
eine Drehmomentübertragungseinrichtung (40) mit der Übertragungskupplung (4) und der versetzt positionierten dritten Gelenkwelle (12) verbunden ist.

2. Vierradfahrzeug-Antriebsstrang nach Anspruch 1, **dadurch gekennzeichnet**, daß zumindest zwei der ersten, zweiten und dritten Gelenkwelle (7, 9, 12; 107, 109, 12) gleiche Längen haben.

3. Vierradfahrzeug-Antriebsstrang nach Anspruch 1, **dadurch gekennzeichnet,** daß die erste, zweite und dritte Gelenkwelle (7, 9, 12; 107, 109, 12) gleiche Längen haben.

4. Vierradfahrzeug-Antriebsstrang nach einem der vorhergehenden Ansprüche, **dadurch gekennzeichnet,** daß das erste Differentialgetriebe (5; 3) in der Nähe des Motors (2) angeordnet ist, und daR das zweite Differentialgetriebe (3; 5) in der Nähe des Getriebes (2) angeordnet ist.

5. Vierradfahrzeug-Antriebsstrang nach einem der vorhergehenden Ansprüche, **dadurch gekennzeichnet,** daß eine Kupplung (6) oder ein Drehmomentwandler mit der ersten Gelenkwelle (7; 107) gekoppelt ist und nahe dem Motor (1) bzw. dem Getriebe (2) angeordnet ist.

6. Vierradfahrzeug-Antriebsstrang nach einem der vorhergehenden Ansprüche, **dadurch gekennzeichnet,** daß die Kupplung (6) oder der Drehmomentwandler zwischen dem Motor (1) und der Übertragungskupplung (4) angeordnet ist,
daß die Kupplung (6) oder der Drehmomentwandler und die Übertragungskupplung (4) in miteinander verbundenen Gehäusen (48, 61) angeordnet sind, die mit dem Motor (1) verbunden sind, und
daß das Getriebe (2) und das zweite Differentialgetriebe (3) zusammen angeordnet sind und in miteinander verbundenen Gehäusen (23, 38) aufgenommen werden.

7. Vierradfahrzeug-Antriebsstrang nach einem der vorhergehenden Ansprüche, **dadurch gekennzeichnet,** daß die Lager (72; 172) zwischen der ersten und zweiten Gelenkwelle (7, 9; 107, 109) und Lager (73; 173) zwischen dem Drehmomentrohr (71; 171) und der zweiten, hohlen Gelenkwelle (9; 109) angeordnet sind.

## Revendications

1. Transmission à quatre roues motrices pour véhicule comportant un moteur (1), une transmission (2), un premier engrenage différentiel (3) et un deuxième engrenage différentiel (5), dans laquelle
ledit moteur (1) est disposé avec l'un (3 ; 5) des premier et deuxième engrenages différentiels (3 ; 5) et est fonctionnellement relié à ceux-ci, et ladite transmission (2) est disposée avec et fonctionnellement reliée à l'autre (5 ; 3) des premier et deuxième engrenages différentiels (3 ; 5) ;
ledit moteur (1) est relié à la transmission (2) par un premier arbre de transmission (7 ; 107) et est situé à un côté des roues avant (17, 18, 19, 20) du véhicule ;
ladite transmission (2) est située au côté des roues arrières (13, 14, 15, 16) du véhicule, elle reçoit une force d'entraînement de sortie du moteur (1) et est pourvue de deux parties de sortie ;
ledit premier engrenage différentiel (3) est disposé au voisinage de ladite transmission (2) pour distribuer l'entraînement final aux roues arrière (15, 16), ledit premier engrenage différentiel (3) distribuant la puissance de sortie du moteur de ladite transmission (2) via l'une desdites deux parties de sortie de la transmission (2) dans deux roues arrière (15, 16) ;
ledit deuxième engrenage différentiel (5) est disposé au voisinage dudit moteur (1) pour distribuer l'entraînement final auxdites roues avant (19, 20) ;
ledit premier arbre de transmission (7 ; 107) est disposé entre ledit moteur (1) et ladite transmission (2) de façon à transmettre l'entraînement entre ceux-ci; et
un deuxième arbre de transmission (9 ; 109) étant relié à l'autre partie de sortie de la transmission (2) ;
caractérisée en ce que
ledit deuxième arbre de transmission (9 ; 109) est creux de façon à renfermer coaxialement ledit premier arbre de transmission (7 ; 107) et sert à transmettre l'entraînement entre ladite transmission (2) et un embrayage de transfert (4) commandé par une pression hydraulique appliquée de l'extérieur pour transmettre sélectivement l'entraînement ;
un tube de couple (71 ; 171) entoure lesdits premier et deuxième arbres de transmission (7, 107, 9, 109) et relie la transmission (2) à l'embrayage de transfert (4) ;
ledit embrayage de transfert (4) est situé au côté des roues avant et agencé derrière ledit moteur (1) dans une direction de mouvement avant du véhicule et est disposé coaxialement avec ledit premier arbre de transmission (7 ; 107) ;
un troisième arbre de transmission (12) est disposé avec son axe dans une position décalée vers le côté par rapport aux premier et deuxième arbres de transmission (7 ; 107 ; 9 ; 109) dans la direction de mouvement avant du véhicule et est relié audit deuxième engrenage différentiel (5) ; et
un moyen de transmission de couple (40) est relié audit embrayage de transfert (4) et audit troisième arbre de transmission (12) positionné de façon décalée.

2. Transmission à quatre roues motrices pour véhicule selon la revendication 1, caractérisée en ce qu'au moins deux des premier, deuxième et troisième arbres de transmission (7, 9, 12 ; 107, 109, 12) ont des longueurs similaires.

3. Transmission à quatre roues motrices pour véhicule selon la revendication 1, caractérisée en ce que l'ensemble des premier, deuxième et troisième arbres de transmission (7, 9, 12 ; 107, 109, 12) ont des longueurs similaires.

4. Transmission à quatre roues motrices pour véhicule selon l'une des revendications précédentes, caractérisée en ce que le premier engrenage différentiel (5 ; 3) est disposé au voisinage du moteur (1), et le deuxième engrenage différentiel (3 ; 5) est disposé au voisinage de la transmission (2).

5. Transmission à quatre roues motrices pour véhicule selon l'une des revendications précédentes, caractérisée en ce qu'un embrayage (6) ou un convertisseur de couple est associé au premier arbre de transmission (7 ; 107) et est situé au voisinage soit du moteur (1) soit de la transmission (2).

6. Transmission à quatre roues motrices pour véhicule selon l'une des revendications précédentes, caractérisée en ce que l'embrayage (6) ou le convertisseur de couple est disposé entre le moteur (1) et l'embrayage de transfert (4),
en ce que l'embrayage (6) ou le convertisseur de couple et l'embrayage de transfert (4) sont disposés dans des boîtiers interconnectés (48, 61) qui sont reliés au moteur (1), et
en ce que la transmission (2) et le deuxième engrenage différentiel (3) sont disposés ensemble et logés dans des boîtiers interconnectés (23, 38).

7. Transmission à quatre roues motrices pour véhicule selon l'une des revendications précédentes, caractérisée en ce que des paliers (72, 172) sont disposés entre les premier et deuxième arbres de transmission (7, 9 ; 107, 109), et des paliers (73, 173) sont disposés entre le tube de couple (71, 171) et le deuxième arbre de transmission creux (9, 109).
